# EUROPÄISCHE PATENTSCHRIFT

(11) **EP 1 273 872 B1**
(45) Veröffentlichungstag und Bekanntmachung des Hinweises auf die Patenterteilung: **17.10.2007**
(21) Anmeldenummer: 02010801.5
(22) Anmeldetag: 15.05.2002
(51) Int. Cl.: F41H 7/02

(54) **Gepanzertes Transportfahrzeug**
Armoured transport vehicle
Véhicule de transport blindé

(30) Priorität: 07.07.2001 DE 10133146
(43) Veröffentlichungstag der Anmeldung: 08.01.2003
(73) Patentinhaber: Rheinmetall Landsysteme GmbH, 24107 Kiel (DE)
(72) Erfinder: Hass, Frank, 24235 Wendtorf (DE)
(74) Vertreter: Dietrich, Barbara

(56) Entgegenhaltungen:
- DE-C- 728 057
- FR-A- 2 158 969
- US-A- 2 541 288
- US-A- 4 239 447
- US-A- 4 729 444
- ERIC RUSSELL: "the ultimate off-roader" AUTOMOTIVE ENGINEER, Juni 2001 (2001-06), Seiten 86-88, XP001075250

## Beschreibung

Die Erfindung betrifft ein gepanzertes ABC-geschütztes Transportfahrzeug mit modularen aufbau.

Ein derartig gepanzertes Fahrzeug setzt sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammen. Bei einem Schützenkampffahrzeug werden zum Beispiel mit dem Fahrzeug mehrere Soldaten transportiert, die schnell über eine Heckklappe aussteigen oder aufsitzen können. Bei einem anderen Fahrzeugtyp, dem gepanzerten Transport-Kraftfahrzeug, abgekürzt GTK, wird das Fahrzeug in Module eingeteilt und ein sogenanntes Missionsmodul austauschbar auf dem Chassis oder Fahrmodul untergebracht. Verschiedene Bewaffnungen und Ausrüstungen können dann als Modul austauschbar auf dem Fahrzeug wechselweise mitgeführt werden.

Nach dem Stand der Technik sind verschiedene Vorschläge zum Aufbau von modularen Fahrzeugen und zu gepanzerten Transportfahrzeugen gemacht worden.

In der DE 4219688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19502036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 196 19 865 A1 wird ein umrüstbares militärisches Radfahrzeug mit trennbaren Modulen dargestellt, das aus einem Grundgehäuse zur Aufnahme der Fahrzeugkomponenten besteht und von einem dieselmechanischen zu einem diesel-elektrischen Antrieb umgebaut werden kann bei Vorteilen für die Bauhöhe und Ausgestaltung des Fahrzeugs.

Aus der DE 199 27 656 A1 ist ein gepanzertes Transportkraftfahrzeug bekannt, welches mit einem unbemannten Schartenturm einschließlich Lafette und Bordmaschinenwaffe als Bewaffnung ausgerüstet ist, der von der Besatzung aus dem Fahrzeuginneren fernbedient wird.

Die US 4,239,447 offenbart einen geschützten Geldtransporter, welcher neben einem Hauplfahrzeug ein so genanntes Satellitenfahrzeug aufweist. Das Hauptfahrzeug ist dabei in einen Fahrerraum und in einen Laderaum unterteilt. Das Satellitenfiahrzeug selber ist bemannt und kann über eine seitliche Rampe das Hauptfahrzeug verlassen. Zwischen dem Satellitenfahrzeug und dem Hauptfahrzeug besteht ein Zugang für den Bediener des Satellitenfahrzeuges.

Die US 2,541,258 betrifft eine Unterbringungsmägfiahkeit eines kleinen Fahrzeuges in einem größeren. Das kleinere Fahrzeug kann dabei über eine Heckklappe vom größeren Fahrzeug aufgenommen werden. Weitere Einzelheiten betreffen den konstruktiven Aufbau zur Aufnahme des ansonsten bemannten Fahrzeuges.

Bei einem Kampfmittel-Beseitigungs-Fahrzeug als Spezialfahrzeug besteht die Aufgabe darin, unbekannte Objekte, die Sprengstoff oder Minen enthalten können, zu beseitigen. Dies wird üblicherweise heute mittels eines ferngesteuerten Manipulators oder mittels eines ferngesteuerten Manipulator-Fahrzeugs durchgeführt.

Da das Grundfahrzeug als ein Familienfahrzeug entwickelt ist, bei dem geometrische Größe und hohes Gewicht ein grundsätzliches Negativkriterium aus plausiblen Gründen bedeuten, ist die Darstellung von Spezialfahrzeugen auf Basis des Familienfahrzeugs ein besonderes Innenraum- und Platzproblem bei der Auslegung des spezifischen Fahrzeugs.

Aufgabe der Erfindung ausgehend von der US 4 239447A ist es die ein Kampfmittelbeseitigungsfahrzeug darzustellen, welches ein fernsteuerbares Manipulator-Fahrzeug an Bord mitführen kann, und folgende Teilaufgaben erfüllen soll:

Das Manipulatorfahrzeug (EOD = Explosive Ordnance Disposal) soll selbstständig in das Mutter- oder Basisfahrzeug ein- und ausfahren können.

Ein ballistischer Schutz soll für das transportierte EOD vorhanden sein.

Ein vom Mannschaftsraum getrennter und ABC-dichter Laderaum soll das EOD im Mutterfahrzeug aufnehmen.

Das EOD soll in einer Aufnahmewanne im Basisfahrzeug stehen, um Beschädigungen durch z.B. Fahrbelastungen zu vermeiden und die Reinigung zu erleichtern.

Dabei gelten die weiteren Bedingungen als Zielvorstellung, dass wegen der Radarsignatur und wegen des Schutzaufbaus eine glatte Außenwand mit wenig Durchbrüchen angestrebt wird und das Fahrzeug keine Unterschiede zu Silhouette und Geometrie der übrigen Familienfahrzeuge aufweist.

Diese Aufgabe wird erfindungsgemäß durch die kennzeichnenden Merkmale des Anspruchs 1 gelöst. Weitere Merkmale ergeben sich aus den Unteransprüchen.

Erfindungsgemäß wird anstelle des Missionsmoduls (2) auf einem bekannten Fahrzeug (1) ein Modul Kampfmittelbeseitigung bestehend aus dem Aufbauteil (3) und seinen Einbauten angeordnet.

In dem Aufbauteil (3) werden alle Einbauten, die spezifisch für das Kampfmittelbeseitigungsfahrzeug sind, eingebaut. Der Fahrzeug-Innenraum (4), der Teil des Basisfahrzeugs (1) oder des zusätzlich aufgebrachten Moduls (3) sein kann, ist mittels einer abgedichteten Wand und Tür (5) vom Manipulatorraum des Aufbauteiles (3) getrennt. Das Manipulatorfahrzeug (EOD) ist im Innenraum des Aufbauteiles (3) fahrbereit verzurrt untergebracht.

Die Vorteile der Erfindung liegen darin, dass der Manipulator EOD ballistisch geschützt im Trägerfahrzeug in einem eigenen separaten Schutzraum untergebracht ist. Über eine Heckklappe, die gleichzeitig als Rampe bis auf den Erdboden ausgebildet ist, kann das EOD das Fahrzeug verlassen und wieder einfahren. Mittels Docking-Anschluß im Trägerfahrzeug kann das EOD im eingefahrenen Zustand am Bordnetz des Trägerfahrzeugs angeschlossen sein und mit Daten und Ladeenergie versorgt werden. Das EOD kann auch für weitere Zwecke, zum Beispiel fernbediente Erkundung bei entsprechender Sensorausrüstung, aus dem Träger ausfahren, eine Mission erfüllen und wieder einfahren. Das Fahrzeug zur Kampfmittelbeseitigung ist in seinem Aufbau und Silhouette im Fahrbetrieb nicht verändert gegenüber den anderen Fahrzeugvarianten der Fahrzeugfamilie.

Ausführungsbeispiele der Erfindung sind in den Zeichnungen schematisch dargestellt und werden im folgenden näher beschrieben. Es zeigen:
- Figur 1:: eine Seitenansicht eines bekanntesn Basis-Fahrzeuges
- Figur 2:: eine Seitenansicht im Schnitt eines Fahrzeuges mit EOD-Modul
- Figur 3:: eine Seitenansicht im Schnitt mit ausgefahrenem EOD

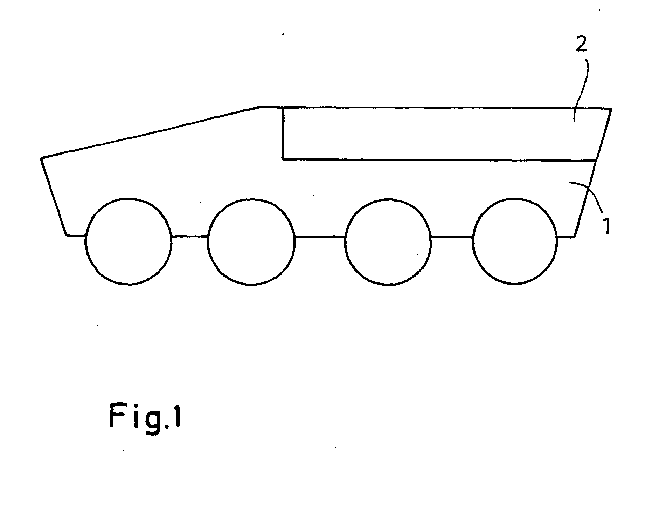

Figur 1 zeigt ein bekanntes Basisfahrzeug oder Fahrmodul 1 mit einem Radfahrwerk und dem oben hinten angebauten Missionsmodul 2. Das Missionsmodul 2 enthält eine spezifische Ausrüstungen für eine Aufgabe oder Mission und es ist demontierbar, austauschbar befestigt, so daß mittels Missionsmodulen spezifische Fahrzeuge ausgerüstet werden können, die allesamt ein identisches Basisfahrzeug besitzen.

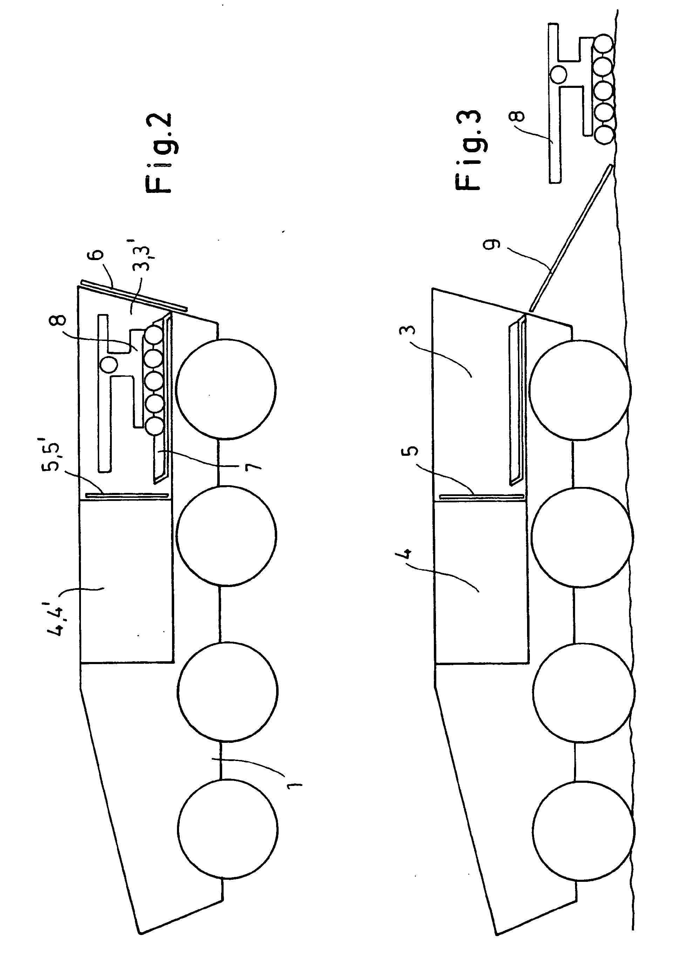

Figur 2 zeigt ein Basisfahrzeug 1, bei dem das Missionsmodul 2 entfernt ist. Dafür ist ein Modul bestehend aus einem Aufsetzteil 4' und EOD-Funktionsteil 3 angeordnet. Eine druckdichte Abschottung 5' ist zwischen den Teilen 3 und 4' eingebaut. Im Funktionsteil 3 ist das EOD-Manipulatorfahrzeug 8 auf einem Bodeneinsatz 7 untergebracht. Eine Heckklappe 6 verschließt den Funktionsraum 3.

In Figur 3 ist das EOD-Fahrzeug 8 über die Heckklappe 6 in deren geöffneter Stellung 9 aus dem Basisfahrzeug 1 ausgefahren. In dem Aufsetzteil 4' können zusätzliche Bediener oder Geräte für die Kampfmittelbeseitigungsmission untergebracht werden.

Ein geschlossenes, ballistisch und ABC-geschütztes Fahrzeug 1, das für die Kampfmittelbeseitigung eingesetzt wird, transportiert ein fernsteuerbares Manipulatorfahrzeug 8 unter vollem Schutz in einem abgedichteten Raum 3. Dieser Raum ist von dem Fahrzeug-Innenraum 4 mittels einer Schottwand 5' mit einer abgedichteten Tür 5 getrennt. Das Fahrzeug 8 kann bei geöffneter Heckklappe 6 als Rampe aus dem Raum 3 aus- und einfahren.

Um den für das Modul 3 vorgesehenen Raum 3' nach eventueller Kontamination bei geöffneter Heckklappe 6 leicht reinigen zu können, um eine geeignete Ein- und Ausfahrbahn für das Manipulatorfahrzeug zu schaffen sowie um den Minenschutz für das Manipulatorfahrzeug zu verbessern, wird in Raum 3' ein Bodeneinsatz 7 eingebaut, der an den Seitenwänden oder der oberen Gehäusewand befestigt wird und leicht auswechselbar ist.

Der Transportraum 3' für das Manipulatorfahrzeug 8 ist mit seiner Oberfläche und Einbau des Einsatzes 7 so ausgeführt, dass eine Reinigung mit flüssigen Reinigungsmitteln nach Kontamination des Raums einfach und mittels Abspritzen möglich ist. Wegen des abgetrennten Transportraums 3' ist auch die Wiederaufnahme eines kontaminierten Manipulatorfahrzeugs zunächst ohne Gefahr für die Fahrzeugbesatzung möglich, um dann später zu dekontaminieren.

### Bezugszeichenliste

- 1: Fahrzeug
- 2: Missionsmodul
- 3: Aufbauteil (Modul)
- 3': Raum
- 4: Fahrzeuginnenraum
- 4': Aufsetzteil
- 5: Tür
- 5': Abschottung
- 6: Heckklappe
- 7: Bodeneinsatz
- 8: Manipulatorfahrzeug
- 9: Stellung

## Patentansprüche

1. Gepanzertes, ABC- geschütztes Transportfahrzeug (1) mit einem Radfahr- oder Kettenlaufwerk sowie einem als Modul (2) ausgebildeten Fahrzeugaufbau zur Aufnahme und Einbau aller Komponenten für den Betrieb des Fahrzeugs, einer Hecktür oder -klappe (6) am Heck des Fahrzeugs und einer spezifischen Ausrüstung, wobei
- ein Missionsmodulinnenraum (2) vorzugsweise in Fahrzeugquerrichtung in zwei Abschnitte (3, 3', 4, 4') aufgeteilt ist mittels einer gasdichten, druckdichten Schottwand (5') zwischen den Räumen,
- ein selbst fahrendes, fernsteuerbares Manipulatorfahrzeug (8) im hinteren Raumabschnitt (3') fahrbereit untergebracht ist,
- das Manipulatorfahrzeug (8) über die Hecktür oder -klappe (6) in geöffneter Stellung (9) aus dem hinteren Raumabschnitt (3') für das Manipulatorfahrzeug (8) ausfahren oder in dieses einfahren kann und
- der hintere Raumabschnitt (3') ABC- dicht ist.

2. Fahrzeug nach Anspruch 1, **dadurch gekennzeichnet, dass** in der Schottwand (5') eine geeignete abgedichtete Tür (5) als Durchstieg und ein geeignetes Fenster für den Sichtkontakt zwischen Mannschaftsraum und hinterer Raumabschnitt (3') eingebaut sind.

3. Fahrzeug nach einem der Ansprüche 1 oder 2, **dadurch gekennzeichnet, dass** der das Manipulatorfahrzeug (8) beinhaltende hintere Raumabschnitt (3') gas- und staubdicht ausgeführt ist.

4. Fahrzeug nach einem der Ansprüche 1 bis 3, **dadurch gekennzeichnet, dass** das Manipulatorfahrzeug (8) im hinteren Raumabschnitt (3') des Fahrzeugs (1) auf einem Bodeneinsatz (7) abgestellt ist, der so ausgebildet und befestigt ist, dass beim Einwirken einer Minendetonation auf das Fahrzeug (1) Minenschutz für das Fahrzeug (8) besteht und der gleichzeitig zum Ausgleich vorhandener Taschen und Stufen, die das Fahrzeug (8) überfährt, und zum Schutz für den zu befahrenden Gehäuseboden und als Antirutschbelag dient.

5. Fahrzeug nach Anspruch 4, **dadurch gekennzeichnet, dass** der Bodeneinsatz (7) gleichzeitig als Spur- und Einfahrhilfe für das Manipulatorfahrzeug (8) ausgebildet ist.

6. Fahrzeug nach einem der Ansprüche 1 bis 5, **dadurch gekennzeichnet**, das das Manipulatorfahrzeug (8) in eingefahrener Position über eine Andock-Kupplung zwischen Fahrzeug (1) und Manipulatorfahrzeug (8) mit Ladestrom und Daten versorgt wird.

7. Fahrzeug nach einem der Ansprüche 1 bis 6, **dadurch gekennzeichnet, dass** das Manipulatorfahrzeug (8) in eingefahrener Position mittels der geschlossenen Heckklappe (6) und fallweise weiterer Anbauteile in einer Zurrposition für den Fahrbetrieb von Fahrzeug (1) festgehalten und gezurrt wird.

## Claims

1. Armoured, NBC-hardened, transport vehicle (1) having a wheel chassis or a tract chassis and having a vehicle structure in the form of a module (2) for the combination and installation of all the components for operation of the vehicle, having a rear door or hatch (6) at the rear of the vehicle and having specific equipment, wherein
- a mission module internal area (2) is split, preferably in the vehicle lateral direction, into two sections (3, 3', 4, 4') by means of a gastight, pressuretight partition wall (5') between the areas,
- a self-propelled, remotely controllable manipulator vehicle (8) is accommodated in the rear area section (3'), ready to be driven,
- the manipulator vehicle (8) can drive out of the rear area section (3') for the manipulator vehicle (8), or can drive into it, via the rear door or hatch (6) when in the open position, and
- the rear area section (3') is NBC-hardened.

2. Vehicle according to Claim 1, **characterized in that** a suitable sealed door (5) for passing through and a suitable window for visual contact between the crew area and the rear area section (3') are installed in the partition wall (5').

3. Vehicle according to one of Claims 1 or 2, **characterized in that** the rear area section (3') which contains the manipulator vehicle (8) is designed to be gastight and dusttight.

4. Vehicle according to one of Claims 1 to 3, **characterized in that** the manipulator vehicle (8) is positioned on a floor insert (7) in the rear area section (3') of the vehicle (1), which floor insert (7) is designed and secured such that, under the influence of a mine detonation on the vehicle (1), mine protection is provided for the vehicle (8) and is used at the same time to compensate for any holes or steps which the vehicle (8) drives over, for protection of the housing floor to be driven on, and is an antislip coating.

5. Vehicle according to Claim 4, **characterized in that** the floor insert (7) is at the same time in the form of a tracking and entry aid for the manipulator vehicle (8).

6. Vehicle according to one of Claims 1 to 5, **characterized in that**, when in the driven-in position, the manipulator vehicle (8) is supplied with charging current and data via a docking coupling between the vehicle (1) and the manipulator vehicle (8).

7. Vehicle according to one of Claims 1 to 6, **characterized in that**, when in the driven-in position, the manipulator vehicle (8) is fixed and latched by means of the closed rear hatch (6) and possibly further fittings in a latched position for driving of the vehicle (1).

## Revendications

1. Véhicule de transport à protection ABC blindé (1) avec un mécanisme de roulement à roues ou à chaîne ainsi qu'une carrosserie de véhicule réalisée en tant que module (2) pour loger et intégrer tous les composants pour le fonctionnement du véhicule, une porte arrière ou hayon (6) à l'arrière du véhicule et un équipement spécifique,
- un espace interne modulaire de mission (2) étant de préférence divisé en deux parties (3, 3', 4, 4') dans le sens transversal au véhicule à l'aide d'une cloison étanche aux gaz et à la pression (5') entre les espaces,
- un véhicule de manipulation téléguidé roulant automatiquement (8) étant logé de manière prêt à rouler dans la partie de l'espace arrière (3'),
- le véhicule de manipulation (8) pouvant sortir, via la porte arrière ou le hayon (6) en position ouverte (9), de la partie de l'espace arrière (3') pour le véhicule de manipulation (8) ou pouvant rentrer dans celui-ci, et
- la partie de l'espace arrière (3') présentant une étanchéité de type ABC.

2. Véhicule selon la revendication 1, **caractérisé en ce que** l'on intègre dans la cloison étanche (5') une porte adéquate calfeutrée (5) en guise de passage ainsi qu'une fenêtre adéquate pour le contact visuel entre l'espace de l'équipage et la partie de l'espace arrière (3').

3. Véhicule selon l'une des revendications 1 ou 2, **caractérisé en ce que** la partie de l'espace arrière (3') comprenant le véhicule de manipulation (8) est réalisée de manière étanche aux poussières et au gaz.

4. Véhicule selon l'une des revendications 1 à 3, **caractérisé en ce que** le véhicule de manipulation (8) est déposé dans la partie de l'espace arrière (3') du véhicule (1) sur une garniture de plancher (7), qui est réalisée et fixée de manière à ce qu'en cas de soumission du véhicule (1) à la détonation d'une mine, il y a une protection contre les mines du véhicule (8), et qui sert en même temps à la compensation de poches et marches sur lesquelles passe le véhicule (8), ainsi que de protection pour le sol de l'habitacle sur lequel on roule ainsi que de revêtement antidérapant.

5. Véhicule selon la revendication 4, **caractérisé en ce que** la garniture de plancher (7) est en même temps réalisée en tant que piste et aide à l'entrée pour le véhicule de manipulation (8).

6. Véhicule selon l'une des revendications 1 à 5, **caractérisé en ce que** le véhicule de manipulation (8), en position rentrée, est alimenté en données et courant de charge via un couplage d'amarrage entre le véhicule (1) et le véhicule de manipulation (8).

7. Véhicule selon l'une des revendications 1 à 6, **caractérisé en ce que** le véhicule de manipulation (8), en position rentrée, est maintenu et amarré à l'aide du hayon fermé (6) et d'autres pièces montées le cas échéant dans une position d'amarrage pour faire rouler le véhicule (1).
